**Europäisches Patentamt**

**European Patent Office**

**Office européen des brevets**

(19)

(11) Veröffentlichungsnummer: **0 071 078**
**A1**

(12) **EUROPÄISCHE PATENTANMELDUNG**

(21) Anmeldenummer: **82106281.7**

(22) Anmeldetag: **14.07.82**

(51) Int. Cl.$^3$: **C 01 B 17/54**
**C 01 B 17/58**

(30) Priorität: **25.07.81 DE 3129445**

(43) Veröffentlichungstag der Anmeldung:
**09.02.83 Patentblatt 83/6**

(84) Benannte Vertragsstaaten:
**BE DE FR GB NL**

(71) Anmelder: **BAYER AG**
**Zentralbereich Patente, Marken und Lizenzen**
**D-5090 Leverkusen 1, Bayerwerk(DE)**

(72) Erfinder: **Bakay, Tibor, Dipl.-Ing.**
**Lahnstrasse 7**
**D-4047 Dormagen(DE)**

(72) Erfinder: **Becker, Wolf, Dr.**
**An den Buchen 30**
**D-5000 Koeln 80(DE)**

(54) Verfahren zur Herstellung von Schwefeldioxid.

(57) Die vorliegende Erfindung betrifft ein Verfahren zur Herstellung von Schwefeldioxid aus Schwefel und Sauerstoff unter gleichzeitiger Spaltung von verdünnter und/oder verunreinigter Schwefelsäure, bei dem die Brauchschwefelsäure bei der Verbrennung von Schwefel in Sauerstoff oder in mit Sauerstoff angereicherter Luft in einer solchen Menge zudosiert wird, daß bei der Verbrennung eine Temperatur von 800-1300°C nicht überschritten wird.

EP 0 071 078 A1

0071078

BAYER AKTIENGESELLSCHAFT          5090 Leverkusen, Bayerwerk

Zentralbereich                    Je/bc/c
Patente, Marken und Lizenzen


Verfahren zur Herstellung von Schwefeldioxid


Die vorliegende Erfindung betrifft ein Verfahren zur
Herstellung von Schwefeldioxid aus Schwefel und Sauerstoff unter gleichzeitiger Spaltung von verdünnter und/
oder verunreinigter Schwefelsäure.

Es ist bekannt, Brauchschwefelsäuren, die mehr oder weniger verunreinigt bzw. verdünnt anfallen, durch thermische
Spaltung aufzuarbeiten. Unter Brauchsäuren im Sinne der
vorliegenden Erfindung werden Schwefelsäuren beliebiger
Konzentration, die mit anorganischen und/oder organischen Stoffen verunreinigt sind, wie sie bei den unterschiedlichsten chemischen Reaktionen anfallen, verstanden.
Die für die thermische Spaltung notwendige Wärme wird
durch Verbrennung von Heizöl, Gas oder anderen organischen
Energieträgern erzeugt. Es ist weiterhin bekannt, Schwefeldioxid durch Verbrennung von Schwefel in Sauerstoff
oder mit Sauerstoff angereicherter Luft herzustellen.
Die großtechnische Durchführung dieses Verfahrens ist jedoch aufgrund der hohen Verbrennungstemperaturen (bis ca.
3000°C) sehr schwierig, da für die verfügbaren Verbrennungsöfen die maximal zulässigen Temperaturen bei
ca. 1800°C liegen. Mit dem vorgeschlagenen Verfahren
wird sowohl das Problem der Herstellung von Schwefeldioxid
bzw. Schwefelsäure aus Schwefel unter Zusatz von reinem


Le A 20 289

- 2 -

Sauerstoff oder mit Sauerstoff angereicherter Luft als auch das der Brauchsäureaufarbeitung zufriedenstellend gelöst. Die bei der alleinigen Verbrennung von Schwefel in Sauerstoff oder mit Sauerstoff angereicherter Luft entstehenden hohen Temperaturen werden erfindungsgemäß dadurch vermieden, daß gleichzeitig mit der Verbrennung des Schwefels eine Spaltung von Brauchschwefelsäure durchgeführt wird.

Gegenstand der vorliegenden Erfindung ist daher ein Verfahren zur Herstellung von Schwefeldioxid aus Schwefel und Sauerstoff, welches dadurch gekennzeichnet ist, daß bei der Verbrennung von Schwefel in Sauerstoff oder in mit Sauerstoff angereicherter Luft Schwefelsäure in einer solchen Menge zudosiert wird, daß während der Verbrennung eine Temperatur von 800°C bis 1300°C nicht überschritten wird.

Die Brauchschwefelsäure kann in beliebiger Konzentration, vorzugsweise jedoch von ca. 20 bis 96 Gew.-% eingesetzt werden. Die Schwefelsäure wird je nach ihrem Verdünnungsgrad in solchen Mengen zugesetzt, daß die Verbrennungstemperatur ca. 800-1300°C, vorzugsweise 1000-1100°C, beträgt. Bei 20 %iger Schwefelsäure werden ca. 40 Gew.-% und bei 96 %iger Schwefelsäure ca. 45 Gew.-%, bezogen auf die Gesamtmenge, (Gesamtmenge bestehend aus: Schwefelsäure, Wasser, Schwefel, Sauerstoff und Verunreinigungen, z.B. Organika) zugesetzt. Die Zudosierung der Schwefelsäure kann z.B. in der Brennkammer in der Nähe der Schwefelflamme erfolgen, vorzugsweise wird die Schwefelsäure mit dem Schwefel und Sauerstoff bzw. der mit Sauerstoff angereicherten Luft einer Dreistoffdüse, wie sie z.B. in der DE-OS 2 506 438 beschrieben ist, zugeführt.

Le A 20 289

Bei dem vorgeschlagenen Verfahren dient die Verbrennungswärme bei der Schwefelverbrennung zur Deckung der erforderlichen Verdampfungs- und Spaltwärme der verdünnten
Schwefelsäure. Ein Teil des Sauerstoffbedarfs für die
Schwefelverbrennung wird durch die Spaltung der Schwefelsäure bereitgestellt.

In einer Verfahrensvariante wird der Sauerstoff einem
Bad, bestehend aus einer Suspension von verdünnter, gegebenenfalls vorgewärmter Schwefelsäure und feinverteiltem
Schwefel zugeführt, vorzugsweise eingeblasen. Die Zufuhr
von verdünnter Schwefelsäure in die in einer entsprechenden Wanne befindlichen Suspension wird so gewählt, daß
über dem Bad eine Gastemperatur von 800-1300°C
entsteht, wobei der Schwefelsäureanteil etwa 40-45 Gew.%
- bezogen auf die Gesamtmenge - beträgt. Die Suspension
muß jedoch mindestens 30 Gew.-% Schwefel - bezogen
auf die Gesamtmischung - enthalten und die Schwefelsäure
darf eine Menge von 80 Gew.-%, bezogen auf den eingesetzten Schwefel, nicht unterschreiten. Generell wird die
Schwefelsäure in einer Menge von 120 bis 160 Gew.% -
bezogen auf den eingesetzten Schwefel - zudosiert.

In einer weiteren Verfahrens-Variante wird duch einen mit
vorzugsweise Sand beschickten Wirbelschichtreaktor
mit Hilfe von vorgewärmtem Sauerstoff bzw. mit Sauerstoff angereicherter Luft eine Wirbelschicht erzeugt.

Die zu spaltende Abfallschwefelsäure und der Schwefel
werden als vorgewärmte Suspension mit ca. 120°C bis

Le A 20 289

160°C, vorzugsweise 140°C in die Wirbelschicht eingedüst. Die Verbrennung des Schwefels und die Spaltung
der Schwefelsäure erfolgt in der Wirbelschicht bei
einer Temperatur von 800 bis 1300°C, vorzugsweise
1000°C bis 1100°C.

Auch bei dieser Verfahrensvariante muß die Suspension
mindestens 30% Schwefel, bezogen auf die Gesamtmischung,
enthalten und die Schwefelsäurekonzentration darf
60% nicht unterschreiten.

Bei allen Verfahrensvarianten liegt der Abfallschwefelsäureanteil zwischen 30 - 48 %, der Sauerstoffanteil
zwischen 26 - 35 %, bezogen auf die Gesamtmischung.

Bei dem vorliegenden Verfahren ist es möglich, dem zu
verbrennenden Schwefel auch andere schwefelhaltige
Brennstoffe, z.B. Heizöl mit einem hohen Schwefelgehalt,
sogenanntes Heizöl S, zuzufügen. Ferner kann der auch
als Verdüsungsmedium benutzte Sauerstoff z.T. durch
brennbare Gase ersetzt werden.

Bei dem vorliegenden Verfahren wird die durch die
Produktionsanlage geführte Gasmenge erheblich reduziert, daher wird die für die Herstellung von Schwefelsäure benötigte Apparatur in ihren Abmessungen
wesentlich verkleinert. Selbst wenn mit an Sauerstoff
angereicherter Luft gearbeitet wird, wird die unerwünschte
Stickoxidbildung durch die niedrige Verbrennungstemperatur des Schwefels weitgehend vermieden.

Die vorliegende Erfindung soll durch die folgenden
Beispiele noch weiter erläutert werden:

Le A 20 289

Beispiel 1

In einem mit feuerfesten Steinen ausgemauerten Verbrennungsraum wurden mit einer Dreistoffdüse stündlich 300 kg Flüssigschwefel mit gleicher Menge an technischem Sauerstoff verbrannt. Gleichzeitig wurde über eine Dreistoffdüse dem Verbrennungsraum stündlich 480 kg Abfallschwefelsäure (60 % $H_2SO_4$, 37 % $H_2O$ und 3 % organische Verunreinigun-gen) eingedüst. Als Zerstäubungsmedium für den Schwefel und die Abfallsäure diente unter Druck (3 bar) stehender Sauerstoff. Die Menge der eingedüsten Abfallsäure war so eingestellt, daß in der Verbrennungskammer eine Temperatur von ca. 1070°C erreicht wurde. Das anfallende Spaltgas wurde in einem Abhitzekessel auf 350°C gekühlt und anschließend in einem Waschturm mit Wasser berieselt und damit auf ca. 30°C gekühlt. Nach elektrostatischer Entnebelung und Trocknung mit konzentrierter Schwefelsäure wurden 290$m_N^3$/h $SO_2$-Gas mit 2,0 Vol.-% Sauerstofff 0,8 Vol.-% Stickstoff und 0,4 Vol.-% Kohlendioxid gewonnen.

Beispiel 2

In einem ausgemauerten Reaktionsbehälter wurden 250 kg auf ca. 140°C vorgewärmte Suspension, bestehend aus 100 kg Flüssigschwefel und 150 kg Abfallsäure mit 80 % $H_2SO_4$, 18% $H_2O$ und 2 % organischen Verunreinigungen, vorgelegt. Mit Hilfe einer perforierten Lanze wurde unter Druck stehender Sauerstoff in die Suspension eingeblasen. Die Verbrennung des Schwefels und der organischen Verunreinigungen erfolgte in der Suspension, wobei die entstehende Verbrennungswärme die Verdampfung und Spaltung der Schwefelsäure bewirkte.

Die Zuführung von Flüssigschwefel und Sauerstoff
(je 300 kg/h) und die Säurezuführung wurde so
eingestellt, daß die Temperatur im Reaktionsraum ca.
1000°C betrug.

Das anfallende Spaltgas wurde in einem Abhitzkessel auf
350°C gekühlt und anschließend in einem Waschturm mit
Wasser berieselt und damit auf ca. 30°C gekühlt. Nach
elektrostatischer Entnebelung und Trocknung mit konzentrierter Schwefelsäure wurde 310 $m_N^3$/h $SO_2$-Gas mit
3 Vol.-% Sauerstoff, 1 Vol.-% Stickstoff und 0,4 %
Kohlendioxid gewonnen.

Le A 20 289

Patentansprüche

1) Verfahren zur Herstellung von $SO_2$ aus Schwefel und Sauerstoff, dadurch gekennzeichnet, daß bei der Verbrennung von Schwefel in Sauerstoff oder in mit Sauerstoff angereicherter Luft anorganische und/oder organische Bestandteile enthaltende verdünnte oder konzentrierte Schwefelsäure in einer solchen Menge zudosiert wird, daß bei der Verbrennung eine Temperatur von 800-1300°C nicht überschritten wird.

2) Verfahren nach Anspruch 1, dadurch gekennzeichnet, daß die zudosierte Schwefelsäure eine Konzentration von ca. 20 bis 96 Gew.-% aufweist.

3) Verfahren nach Anspruch 1 oder 2, dadurch gekennzeichnet, daß die Schwefelsäure in einer Menge von 120 bis 160 Gew.-%, bezogen auf den eingesetzten Schwefel, zudosiert wird.

4). Verfahren nach einem oder mehreren der Ansprüche 1 bis 3, dadurch gekennzeichnet, daß der Schwefel und die Schwefelsäure der Brennkammer in einer vorgewärmten Suspension zugeführt werden.

5) Verfahren nach Anspruch 1, dadurch gekennzeichnet, daß eine Suspension aus Flüssigschwefel und Schwefelsäure vorgelegt und Sauerstoff in die Suspension eingeblasen wird.

6) Verfahren nach einem oder mehreren der Ansprüche 1 bis 5, dadurch gekennzeichnet, daß die zu spaltende Schwefelsäure in einer auf 120°C bis 160°C vorgewärmten Suspension mit Schwefel in einen mit Sand

Le A 20 289

beschickten Wirbelschichtreaktor eingebracht
wird.

Le A 20 289

Europäisches
Patentamt

**EUROPÄISCHER RECHERCHENBERICHT**

**0071078**
Nummer der Anmeldung

EP 82 10 6281.7

| | EINSCHLÄGIGE DOKUMENTE | | | KLASSIFIKATION DER ANMELDUNG (Int. Cl.⁴) |
|---|---|---|---|---|
| Kategorie | Kennzeichnung des Dokuments mit Angabe, soweit erforderlich, der maßgeblichen Teile | betrifft Anspruch | | |
| D,X | DE - A1 - 2 506 438 (DAVY POWERGAS)<br>* Ansprüche 1, 2 *<br>-- | 1,5 | | C 01 B 17/54<br>C 01 B 17/58 |
| X | DE - B - 1 258 846 (BAYER AG)<br>* Ansprüche 1, 2 *<br>-- | 1,2 | | |
| A | DE - B - 1 467 096 (NIIUI, MOSKAU)<br>* Anspruch 3; Spalte 1, Zeile 67 bis<br>Spalte 2, Zeile 7 *<br>-- | 6 | | RECHERCHIERTE SACHGEBIETE (Int. Cl.³) |
| A | DE - A1 - 2 433 231 (HOECHST)<br>-- | | | |
| A | DE - C - 960 184 (METALLGESELLSCHAFT)<br>---- | | | C 01 B 17/00 |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 20-10-1982 | KESTEN |